Europäisches Patentamt

European Patent Office

Office européen des brevets

(19)

(11) Publication number: **0 090 471**
**B1**

# (12) EUROPEAN PATENT SPECIFICATION

(45) Date of publication of patent specification: **29.01.86**

(21) Application number: **83200431.1**

(22) Date of filing: **24.03.83**

(51) Int. Cl.⁴: **B 07 B 1/08, B 07 B 1/42, F 16 H 13/10, F 16 H 13/02**

(54) **Pneumatic wheel drive for rotary sieves.**

(30) Priority: **24.03.82 NL 8201230**

(43) Date of publication of application:
**05.10.83 Bulletin 83/40**

(45) Publication of the grant of the patent:
**29.01.86 Bulletin 86/05**

(84) Designated Contracting States:
**BE DE FR GB IT NL SE**

(56) References cited:
**DE-C- 342 450
DE-C- 808 516
FR-A- 508 560
FR-A- 782 851
FR-A-1 355 962
GB-A- 426 533
NL-A-6 712 102
US-A-3 100 746**

(73) Proprietor: **Coöperatieve Landbouw Aan- en Verkoopcombinatie b.a. "C.L.C."
Tukseweg 27
NL-8331 KZ Steenwijk (NL)**

(73) Proprietor: **Machinefabriek A. Wijnveen B.V.
Slijpkruikweg 50 Postbus 212
NL-6710 BE Ede (NL)**

(72) Inventor: **Krijnse Locker, Jan André
Willem de Zwijgerstraat 34
NL-8331 GT Steenwijk (NL)**

(74) Representative: **van Assen, Jan Willem Bernard, Ir.
Konijnenlaan 22
NL-2243 ER Wassenaar (NL)**

Courier Press, Leamington Spa, England.

## Description

The invention relates to a friction transmission as defined in the preamble of the claim.

A friction transmission of this type is shown in GB—A—426.533 and is mounted substantially below the lower most sieve surface. The transmission comprises, next to a set of reduction gears, a solid driving friction wheel mounted on a horizontal drive shaft and having a bevilled friction surface. This latter contacts a bevilled friction surface on a horizontal driven solid friction wheel, that is rotatable around the vertical axis of the sieve surfaces.

This known structure has a number of disadvantages, firstly because of the solid structure the limited ability to absorb shocks or impacts, due to differential supply of material to be sifted to the sieve surfaces, secondly the poor accessibility, so that maintenance and repair are complicated and costly, thirdly the easy soiling which leads to a reduced reliability of the transmission and frequent break downs.

The objects of the invention are overcoming these disadvantages, which objects are reached by the features of the characterizing part of the claim.

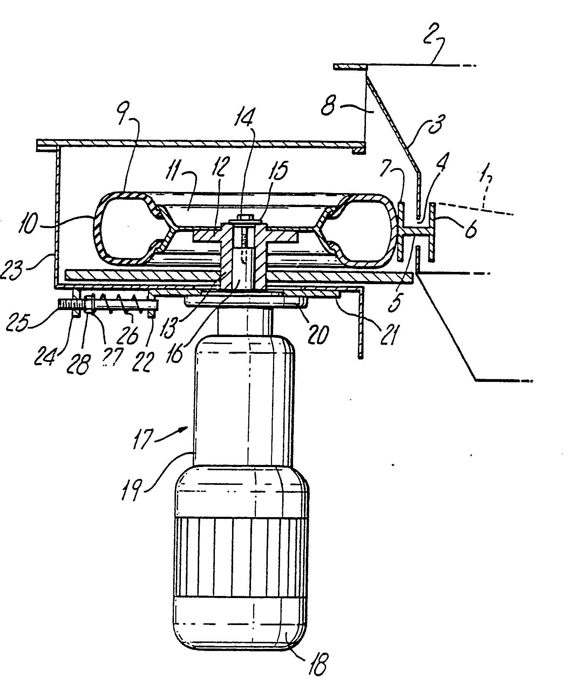

It is remarked that FR—A—782.851 relates to number of friction drives using pneumatic tyres. Figures 1, 2 and 3 show the embodiment of the transmission between two parallel or substantial parallel axes F and E, in which *two* pneumatic tyres are used instead of *one* as according to the present invention. The embodiment of the transmission in which only one tyre is used relates to the transmission which is at the one hand between two axes at right angles, whereas, at the other hand, the transmission has a variable ratio.

The present invention concerns a transmission between two parallel axes and has a fixed ratio; only one tyre and one driving surface are being used.

By application of this pneumatic tyre transmission a simple, inexpensive structure is obtained, which can easily be maintained and renewed respectively, without large disassembly and assembly activities being necessary. When shock or impact loads are encountered, these are absorbed flexibly by a larger or smaller slippage and elastic deformation of the running surface without transfer of these shock loads to the drive set. This pneumatic tyre can also easily absorb variations in the regularity of roundness of the ring shaped drive surface.

The invention will now be further elucidated referring to the accompanying drawing of an embodiment showing a partial axial cross section.

In the drawing a part is shown of the circumference of the rotatable, upwardly inclined, cone shaped sieve surface 1, which is rotatable around a (not shown) vertical shaft in the housing 2. At the upper side of the sieve surface 1 there is supplied the (not shown) material to be sieved, of which the fine component falls through the sieve surface and the coarse component is removed over the edge of the sieve surface. In order to protect the drive against this coarse component, the protection wall 3 is arranged outside the circumference of the sieve surface 1 at the location of the projecting box 23. This protection wall 3 has a passge opening 4 through which the horizontal leg 5 projects of the T-profile 6 extending around the circumference of the sieve surface 1. The ring shaped drive surface 7 is fastened to the horizontal leg 5, of which drive surface 7 the (imaginary) axis of rotation coincides with the axis rotation of the sieve surface 1.

This ring shaped drive surface 7 is accessible for the pneumatic tyre 7 through a niche 8 in the housing 2, of which pneumatic tyre 9 the running surface 10 contacts the drive surface 7. The pneumatic tyre 10 is fastened on the wheel 11, of which the hub 12 is fastened by means of a bushing 13 and a closing nut 14 with washer 15 on the outgoing shaft 16 of the drive set which is generally indicated with 17. This drive set comprises preferencially an electric motor 18 and a gear reduction box 19, which is fastened by means of a flange 20 and a number of (not shown) nuts and bolts to the sliding plate 21. This sliding plate 21 is slidable from and to the housing 2 in (not shown) guides and is provided at its side remote from the housing 2 with a vertical flange 22, whereas below the fixed part of the projecting box 23 for the drive, also a vertical flange 24 is fastened. Through these flanges 23 and 24 aligned threaded holes are made through which extends the screw bolt 25. Around this screw bolt 25 there is mounted a pressure spring 26, which is confined between the flange 22 and a pressure ring 27, which in its turn is pressured by an adjustment nut 28 which is displaceable over the screw bolt 25. With this screw 28 it is possible to adjust the pressure, with which the pneumatic tyre 9 is pressed against the ring shaped surface 7, whereas the slide plate 21 always stays elastically slidable in its (not shown) guides.

## Claim

Friction transmission for driving a rotary sieve device (2), comprising at least one drive set (17), which is connected to a plurality of rotatable substantially horizontal sieve surfaces (1), which are rotatable around a substantially vertical axis and are arranged in a fixedly mounted housing (2, 3), in which the transmission comprises at least one friction wheel (9—11), of which the running surface (10) can be contacted with at least one ring shaped drive surface (7) connected to the rotatable sieve surfaces (1), characterized in that the drive set (17) is arranged free from the housing (2, 3) of the sieve surfaces (1), of which the ring shaped cylindrical drive surface (7), having a vertical axis of rotation, is arranged at the outside circumference (5, 6) of the sieve surfaces (1), so that the drive surface (7) is accessible for a pneumatic tyre (9) on the friction wheel from the outside of the housing (2, 3), and the axis of rotation of the pneumatic tyre (9) extends parallel to the vertical axis of rotation of the drive surfaces (7) whereas the flange (20) of the drive set (17) is fastened to a slide plate (21) which is slidable in guides to and from the ring shaped drive surface (7), and between a flange (22) of the slide plate (21) and a flange (24) of the fixed bar (23) of the housing (2, 3) a pressure spring (26) is arranged, of which the spring tension can be adjusted by means of setting means (27, 28), so that the pneumatic tyre (9) can be elastically pressed against the ring shaped drive surface (7).

## Patentanspruch

1. Reibgetriebe für den Antrieb einer drehbaren Siebanordnung (2), mit wenigstens einem Antriebssatz (17), welcher mit einer Anzahl von drehbaren, im wesentlichen waagerechten Siebflächen (1) verbunden ist, welche um eine wesentlichen senkrechte Achse drehbar und in einem feststehenden Gehäuse (2, 3) angeordnet sind, wobei das Getriebe wenigstens ein Reibrad (9—11) aufweist, dessen Lauffläche (10) mit wenigstens einer mit den drehbaren Siebflächen (1) verbundenen ringförmigen Antriebfläche (7) kontaktierbar ist, dadurch gekennzeichnet, daß der Antriebssatz (17) außerhalb des Gehäuses (2, 3) der Siebflächen (1) angeordnet ist, daß die ringförmige zylindrische Antriebsfläche (7) eine senkrechte Drehachse aufweist und außerhalb des Umfangs (5, 6) der Siebflächen (1) angeordnet ist, so daß die Antriebsfläche (7) von außerhalb des Gehäuses (2, 3) für einen pneumatischen Reifen (9) auf dem Reibrad zugänglich ist, daß sich die Drahachse des pneumatischen Reifens (9) parallel zur senkrechten Drehachse der Antriebsflächen (7) erstreckt, während der Flansch (20) des Antriebssatzes (17) an einer Gleitplatte (21) befestigt ist, welche in Führungen auf die ringförmige Antriebsfläche (7) zu und von ihr weg verschieblich ist, und daß zwischen einem Flansch (22) an der Gleitplatte (22) und einem Flansch (24) eines feststehenden Trägers (23) des Gehäuses (2, 3) eine Druckfeder (26) angeordnet ist, deren Spannung mittels einer Stelleinrichtung (27, 28) einstellbar ist, so daß der pneumatische Reifen (9) mit elastischem Druck in Anlage an der ringförmigen Antriebsfläche (7) belastbar ist.

## Revendication

1. Transmission à friction pour l'entraînement d'un dispositif de tamisage rotatif (2), comprenant au moins un groupe d'entraînement (17), qui est accouplée à une pluralité de surfaces rotatives de tamisage (1) sensiblement horizontales qui peuvent tourner autour d'un axe sensiblement vertical et sont placées dans un carter monté de façon fixe (2, 3), ladite transmission comprenant au moins une roue de friction (9—11) dont la surface de roulement (10) peut venir en contact avec au moins une surface annulaire d'entraînement (7) reliée aux surfaces rotatives de tamisage (1), caractérisée en ce que le groupe d'entraînement (17) n'est pas solidaire du carter (2, 3) des surfaces de tamisage (1), dont la surface annulaire cylindrique d'entraînement (7) à axe de rotation vertical est disposée à la circonférence extérieure (5, 6) des surfaces de tamisage (1), de sorte que la surface d'entraînement (7) est accessible pour un bandage pneumatique (9) prévu sur la roue de friction, à partir de l'extérieur du carter (2, 3), et l'axe de rotation du bandage pneumatique (9) est parallèle à l'axe vertical de rotation des surfaces d'entraînement (7), tandis que la collerette (20) du groupe d'entraînement (17) est fixée à une plaque coulissante (21) qui peut coulisser dans des guidages pour se rapprocher et s'éloigner de la surface annulaire d'entraînement (7), et un ressort de tension (26) est disposé entre une bride (22) de la plaque coulissante (21) et un bride (24) de la paroi fixe (23) du carter (2, 3), la tension de ce ressort pouvant être ajustée à l'aide de moyens de réglage (27, 28), de sorte que le bandage pneumatique (9) peut être pressé élastiquement contre la surface annulaire d'entraînement (7).